# EUROPEAN PATENT SPECIFICATION

(11) **EP 1 073 538 B1**
(45) Date of publication and mention of the grant of the patent: **17.07.2002**
(21) Application number: 99918110.0
(22) Date of filing: 19.04.1999
(51) Int. Cl.: B23K 20/12

(54) **CORROSION RESISTANT ENCLOSURE AND METHODS FOR ITS MANUFACTURE**
KORROSIONSBESTÄNDIGES GEHÄUSE UND HERSTELLUNGSVERFAHREN
ENCEINTE RESISTANT A LA CORROSION ET SON PROCEDE DE FABRICATION

(30) Priority: 22.04.1998 GB 9808607
(43) Date of publication of application: 07.02.2001
(73) Proprietor: THE WELDING INSTITUTE, Great Abington, Cambridge CB1 6AL (GB); Svensk Kärnbränslehantering AB, 102 40 Stockholm (SE)
(72) Inventor: HEDMAN, Tommy, S-187 70 Täby (SE); ANDERSSON, Claes-Göran, S-155 30 Nykvarn (SE); FIELDING, Peter, Bernard, Saffron Walden, Essex CB10 2RS (GB); NICHOLAS, Edward, David, Haverhill, Suffolk CB9 0DH (GB)
(74) Representative: Skone James, Robert Edmund
(86) International application number: GB9901194
(87) International publication number: WO9954081

(56) References cited:
- EP-A- 0 833 117
- US-A- 4 542 846
- US-A- 5 697 511
- "Suitability of various materials for friction welding" METAL PROGRESS, vol. 119, no. 7, June 1981 (1981-06), page 49 XP002109790 ohio, USA
- Svensk Kärnbränlehantering AB 1996 Annual Report Section 6.2

## Description

The invention relates to corrosion resistant enclosures for radioactive material containers and methods for their fabrication.

With the increasing proliferation of nuclear power stations and the like, there is an increasing need to provide secure and safe methods for disposing of radioactive, nuclear waste material. Material that cannot be reprocessed must be stored often for a considerable length of time, thousands of years or more. Until recently, containers for storing such radioactive waste were constructed of steel. Steel containers are manufactured in a number of parts which are then arc welded together leaving an opening to enable the waste material to be loaded into the container following which a closure member is arc welded to the container. The problem with steel containers is that there is the risk that with time they will corrode and radioactive material will leak.

The most important requirement, therefore, for a radioactive material container is that it should remain intact for a very long time in the environment prevailing in a typical storage facility such as a deep repository. It must not be penetrated by corrosion in the ground water present in the rock of such a repository. It has therefore been proposed to provide a corrosion resistant enclosure to define at least an outer wall of the container. Copper and copper alloys have been identified as suitable materials for such an enclosure (see, for example, Svensk Kärnbränslehantering AB, 1996 Annual Report, Section 6.2, which is considered to represent the closest prior art). In order to provide strong corrosion resistance, the walls of these enclosures need to be as thick as possible and typical thicknesses are in the range 30-60mm.

It is believed that such materials at these thicknesses will provide very long term corrosion resistance. However, the enclosures need to be manufactured in sections which are joined together. The joining process is critical since the long term corrosion resistance will be significantly reduced if the join itself is more prone to corrosion attack. Unfortunately, copper and copper alloys of the required thickness are very difficult to weld, primarily due to their high melting point (1083°C). To deal with this, it is therefore proposed to use electron beam welding which can achieve a very high integrity weld having similar corrosion resistance to the enclosure material itself. An example of an electron beam system which has been developed by The Welding Institute and which is suitable for this application is described in PCT/GB98/02882.

The tensile and creep strength is affected by the grain size of the material and the smaller the grain size, the better. Electron beam welding already achieves good corrosion resistance as mentioned above but can generate relatively large grains having dimensions in the order of millimetres. It is therefore desirable to try to improve still further the performance of the welded material while still achieving strong welds between the relatively thick sections.

In accordance with one aspect of the present invention, a method of fabricating a corrosion resistant enclosure for a radioactive material container comprises friction stir welding at least two sections of copper or a copper alloy material together.

We have found that friction stir welding can be used to achieve high integrity, corrosion resistant welds as an alternative to electron beam welding.

Friction stir welding is a method in which a probe of material harder than the workpiece material is caused to enter the joint region and opposed portions of the workpieces on either side of the joint region while causing relative cyclic movement (for example rotational or reciprocal) between the probe and the workpieces whereby frictional heat is generated to cause the opposed portions to take up a plasticised condition; optionally causing relative translational movement between the workpieces and the probe in the direction of the joint region; removing the probe; and allowing the plasticised portions to consolidate and join the workpieces together. Examples of friction stir welding are described in EP-B-0615480 and WO 95/26254.

Friction stir welding (FSW) has been developed as a method for welding thin, light alloys such as aluminium and until now it was not considered possible to use this technique for welding much thicker materials, particularly of copper and copper alloys since it was well known that these materials are difficult to weld due to their high melting point and high thermal conductivity. However, we have found surprisingly that FSW can be used to weld thick copper and copper alloy materials. Although temperatures only reach 700-900°C, FSW is a solid phase technique so a good weld results. Furthermore, the resultant weld has a smaller grain size than can be achieved using electron beam welding. This is because the FSW process breaks up grains as they form and also allows the grains to cool quickly so that they have little chance to grow significantly. As a result, grain sizes of the order of microns are obtained. Tests have also shown that the hardness of the resultant weld is substantially the same as that of the parent material as is its tensile strength. FSW also allows the fabrication of corrosion resistant enclosures which generally are bulky and therefore heavy and so difficult to orient for electron beam welding. A typical nuclear waste container may weigh up to 25 tonnes.

Friction stir welding can accommodate a variety of weld orientations relatively easily while allowing a considerable tolerance in joint preparation as compared with electron beam welding.

Friction stir welding may be used to weld some or all sections of the enclosure. For example, a typical enclosure has a cylindrical form and will be made from two semi-cylindrical halves together with a base and a closure member at each end. The two semi-cylindrical halves may be welded by electron beam welding as may the base while the closure member may be friction stir welded. This allows for benefits of both welding processes to be obtained while allowing the enclosure to be oriented with the opening facing upwardly where the closure member can be more easily welded using friction stir welding than electron beam welding.

Conveniently, the welding step comprises maintaining the sections of the enclosure stationary and moving a friction stir welding tool along a joint line defined between the sections. In other cases, however, the tool could be stationary and the sections moved.

Since the enclosure will normally be oriented with an upwardly facing opening for the purposes of loading radioactive material, in one example the closure member and the wall of the enclosure surrounding the opening are tapered so that the closure member can be supported by the enclosure prior to welding the closure member to the wall. In a second example, at least part of the closure member has a lateral dimension greater than the corresponding dimension of the wall of the enclosure surrounding the opening so that the closure member can be supported by the enclosure prior to welding the closure member to the wall.

The corrosion resistant material is copper or a copper alloy, the preferred material being nominally pure copper.

The enclosure could be used in certain circumstances to define a radioactive material container itself but typically, particularly where the container is to be buried deep underground, the container will be fabricated by providing a structure within the enclosure for holding the radioactive material. This could be a steel structure or the like to react against pressures exerted at depth and typically will be adapted to support fuel rods which are the commonest type of radioactive material to be stored.

In a typical storage process, an enclosure according to the invention is loaded with radioactive material through an opening; and a closure member is welded across the opening so that the radioactive material is fully contained within the container. Typically, the opening will face upwardly during the loading and welding steps although this is not essential.

In general, the enclosure will have a cylindrical form although other tubular cross-sections such as square and the like are possible.

Some examples of methods according to the present invention will now be described with reference to the accompanying drawings, in which:-
Figure 1 illustrates the fabrication of a cylindrical wall of an enclosure;
Figure 2 illustrates an end wall member welded to the cylindrical wall;
Figure 3 illustrates a closure member and the enclosure of Figure 2 just prior to welding and after radioactive waste material has been loaded into the container;
Figure 4 is a view similar to Figure 3 but illustrating a different example of a radioactive waste container;
Figure 5 illustrates graphically the variation in hardness value across a weld;
Figure 6a is a photomacrograph of a transverse section through an example of a weld;
Figures 6b and 6c show portions of the photomacrograph of Figure 6a in greater detail;
Figure 6d is a sketch of the photomacrograph of Figure 6a identifying the various regions of the weld;
Figures 7a-7d show examples of friction stir welding tools from the side and the end, for use in the examples shown in Figures 1 to 4; and,
Figure 8 shows details of the particular tool used to produce the weld shown in Figure 6a, the diagram not being to scale and illustrating dimensions in mm.

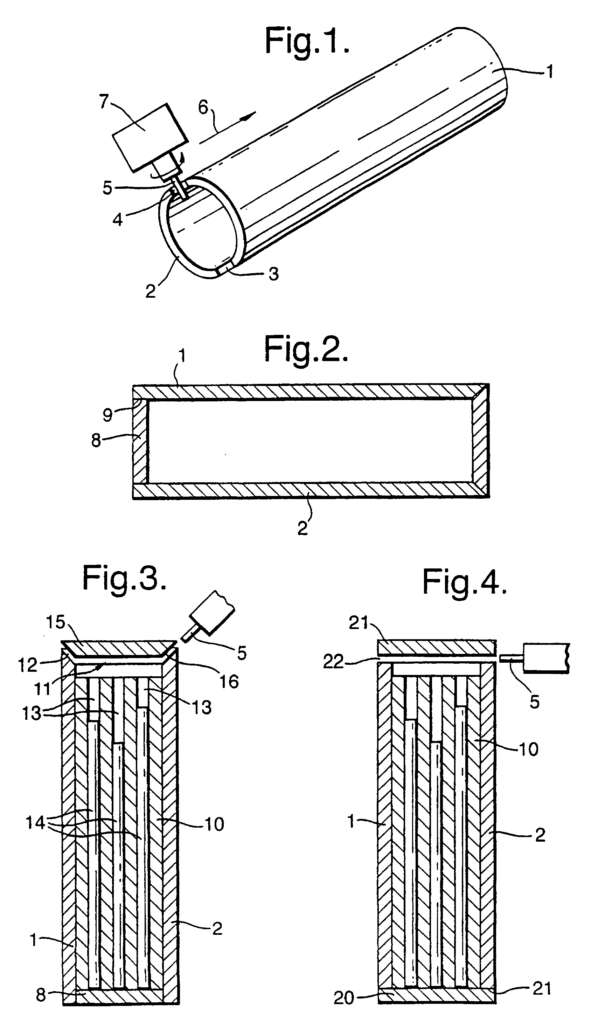

Figure 1 illustrates schematically two semi-cylindrical copper or copper alloy components 1,2, each having a length of about 5m and a thickness in the range 30-60mm. The two components are laid horizontally one above the other so as to define a pair of joint lines 3,4. The components 1,2 are then welded together by inserting a rotating friction stir welding tool 5 into the respective joint lines 3,4 and translating the tool along the joint line as indicated by an arrow 6. The tool 5 is mounted to a drive motor 7 which is mounted in turn to a support gantry (not shown) which traverses the motor 7 and tool 5 in the direction 6.

Following the welding operation just described, a cylindrical wall results which forms the main body of a corrosion resistant enclosure. One end of the enclosure is then closed by a copper or copper alloy end wall member 8 (Figure 2) having a thickness of 30-60mm. The end wall member 8 is inserted horizontally into one end of the cylindrical wall and defines an annular joint line 9 with the cylindrical wall. The end wall member 8 is then welded to the container by inserting the friction stir welding tool 5 into the joint line 9 and translating it around the joint line.

Following securement of the end wall member 8, an open ended enclosure results which is oriented vertically as shown in Figure 3 following which a steel support structure 10 is loaded into the enclosure through an upper opening 11 defined by a wall 12. The steel support structure 10 includes an array of longitudinally extending bores 13 into which spent fuel rods 14 are loaded under secure conditions through the opening 11. Any remaining space may be filled with an inert gas and then the opening 11 is closed by a copper or copper alloy closure member 15 having a thickness of 30-60mm. In order to locate the closure member 15 in place, the wall 12 is tapered inwardly as shown in Figure 3 and a corresponding outer surface 16 of the closure member 15 has a corresponding taper. Figure 3 illustrates the components just before the closure member 15 is placed on the wall 12. Following that placement, the rotating friction stir welding tool 5 is inserted into the joint line defined by the surfaces 12,16 and translated around that joint line so as to friction stir weld the closure member 15 to the rest of the cylindrical enclosure.

In the example described, the friction stir welding tool 5 has been translated along the joint line but an alternative arrangement is possible in which the tool 5 is maintained stationary (while rotating about its axis) and the joint line itself is moved. It should also be noted that although all the joints in this example have been welded using friction stir welding, some could instead be welded using electron beam welding as mentioned above.

Figure 4 illustrates a second example. In this example, the two semi-cylindrical halves 1,2 are again welded together as shown in Figure 1 but in this case a base member 20 has a lateral dimension extending beyond the inner dimension of the cylindrical enclosure thus defining a joint line 21 which can then be friction stir or electron beam welded. In addition, in this example, a closure member 21 is provided having a similar form to the base member 20 which can again be friction welding along a joint line 22. It will be appreciated that the different types of base and closure members in Figure 3 and Figure 4 can be interchanged and mixed as necessary.

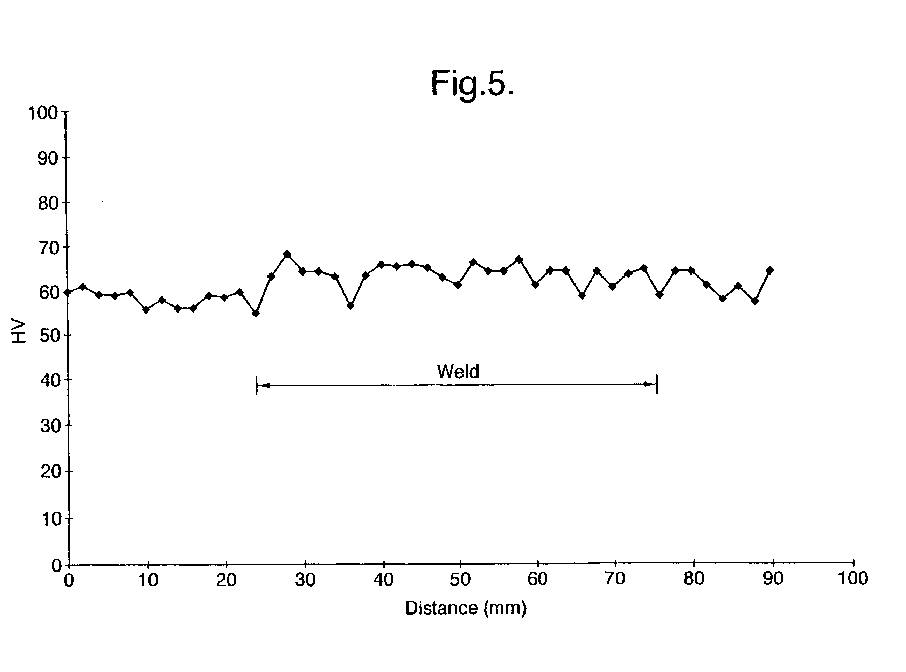

To illustrate the success of this invention, various welds have been made between copper alloys and these welds have been tested and examined. Figure 5 illustrates the variation of hardness value across a friction stir weld between two pieces of commercially pure, high conductivity copper. The region of the weld is indicated in Figure 5 (about 25-75mm) and it can be seen that the hardness value (HV) across the weld is substantially unchanged from that in the parent material on either side.

In a second example, the tensile strength of the welded material was tested. In this example, 10mm thick friction stir welded copper plates were examined and found to have a tensile strength in the order of 224N/mm² which compares favourably with the tensile strength of the original 10mm thick plate of 280N/mm². Furthermore, this tensile strength was found to be very consistent along the length of the weld.

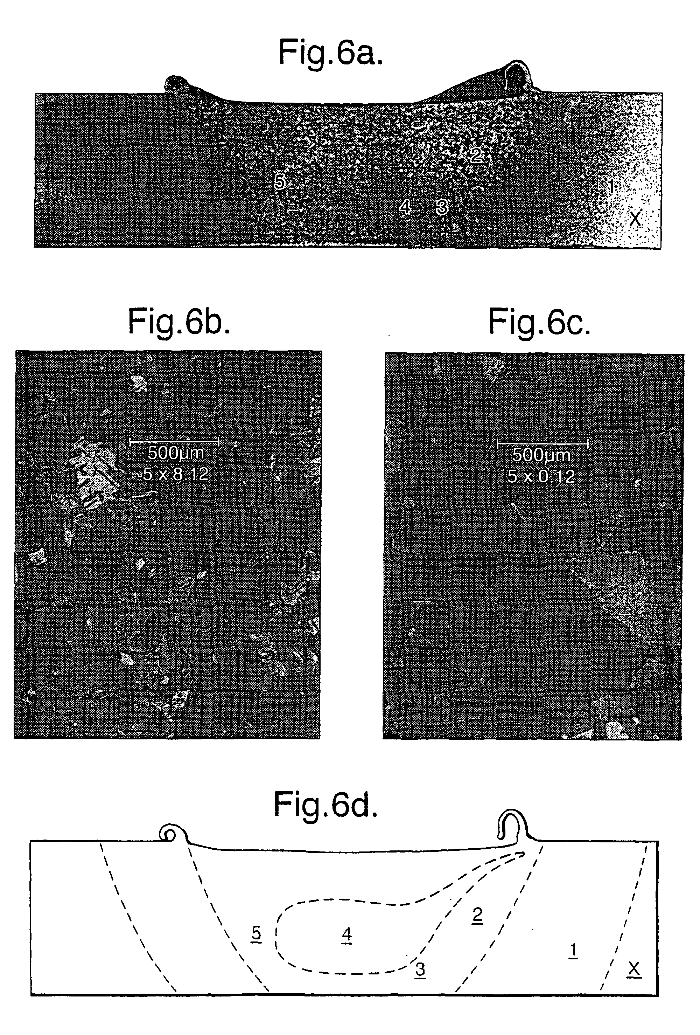

The friction stir weld in various test samples has also been examined at the microscopic level to review grain size. One example is shown in Figure 6a which shows a photomacrograph of a 25mm thick friction stir welded copper plate. The photomacrograph clearly shows four main regions of differing grain structure which are identified for clarity purposes in the sketch 6d. Region X is the region of the copper plate which has been unaffected by the weld procedure. Region 1 is a thermally effected zone in which heat generated by the weld has caused slight modification of the grain structure. Regions 2, 3 and 5 are thermomechanically effected regions in which the structure has been plastically deformed with some areas of recrystallization. Finally, region 4 is a region of dynamically recrystallised material.

Examples of region 1 and a recrystallised portion of region 2 are shown under greater magnification in Figures 6b and 6c respectively. Comparison of the Figures clearly shows how recrystallisation of the grain structure in region 2 results in an increased grain size. Welds obtained so far have exhibited grain sizes in the order of 80-600µm which compares very favourably with the preferred grain sizes in the order of 180-360µm. These values should be compared with those typically found using electron beam welding which can vary from the original plate value of 180-360µm to 4mm.

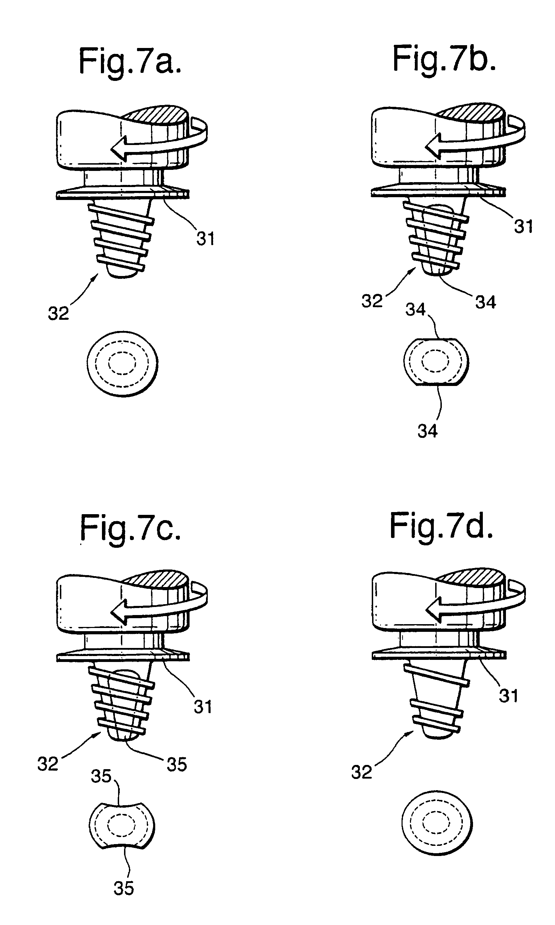

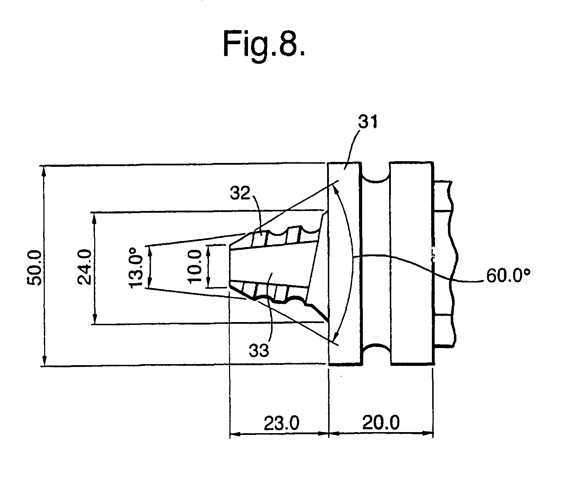

A variety of tools can be used for the welding tool 5 and some examples are shown in Figures 7 and 8.

The tools shown in Figures 7 and 8 each comprise a shoulder 31 and a tool pin 32 with a left hand thread form (for standard clockwise tool rotation).

The tool shown in Figure 7a has a pin with an oval cross-section while the tool shown in Figure 7b is provided with opposed flats 34 so as to define a paddle cross-section. Figure 7c is a variant of that shown in Figure 7b in which the flats 34 are replaced by re-entrant features 35. The tool shown in Figure 7d is similar to that shown in Figure 7a except that the thread has a progressively changing pitch and angle.

The tool shown in Figure 8 has a pair of flats 33 machined onto its sides. However, the cross-section of the pin 32 can be circular, or oval or flattened whereby the probe displacement volume is less than its volume of rotation so as to enable the easier flow of plasticised material.

In operation, the integral pin 32 and shoulder 31 assembly is rotated and plunged into a joint between the workpieces until the shoulder 31 penetrates the workpiece surface. When the pin 32 is first plunged, adjacent metal around it is friction heated as well as a small region underneath the pin 32 tip. The depth of penetration is controlled by the length of the pin 32 below the shoulder 31 by the tool.

Once in contact with the top surface of the substrate, the shoulder applies additional frictional heat to the weld region. In addition, the contacting shoulder 31, which can be machined to a variety of profiles to provide improved coupling, helps to prevent highly plasticised material from being expelled from the weld region.

When the rotating tool 31,32 is fully plunged, the thermomechanically softened material adopts a shape corresponding to that of the overall tool geometry. The heat affected zone is wider at the top surface where it is in contact with the shoulder 31 and tapers down as the pin 32 diameter increases.

The combined frictional heating from the pin 32 and the shoulder 31 creates a highly plasticised "third body" condition around the immersed probe and at the workpiece surface. The plasticised material provides for some hydrostatic effect as the rotary tool moves along the joint helping plasticised material to flow around the tool. The plasticised weld material then coalesces behind the tool as the tool moves away.

## Claims

1. A method of fabricating a corrosion resistant enclosure for a radioactive material container, the method comprising friction stir welding at least two sections (1,2,8,15) of copper or a copper alloy material together.

2. A method according to claim 1, comprising friction stir welding all sections (1,2,8,15) of the enclosure together.

3. A method according to claim 1 or claim 2, wherein the enclosure defines an opening (11) through which radioactive material can be loaded in use, one of the sections (1,2,8,15) comprising a closure member (15,21) for closing the opening (11).

4. A method according to claim 3, wherein the closure member (15) and the wall (1,2) of the enclosure surrounding the opening (11) are tapered so that the closure member (15) can be supported by the enclosure prior to welding the closure member (15) to the wall (1,2).

5. A method according to claim 3, wherein at least part of the closure member (21) has a lateral dimension greater than the corresponding dimension of the wall (1,2) of the enclosure surrounding the opening (11) so that the closure member (21) can be supported by the enclosure prior to welding the closure member (15) to the wall (1,2).

6. A method according to any of the preceding claims, wherein the welding step comprises maintaining the sections (1,2) of the enclosure stationary and moving a friction stir welding tool (5) along a joint line defined between the sections (1,2).

7. A method of fabricating a container for receiving radioactive material, the method comprising fabricating an open enclosure according to one of claims 3 to 6 claim 3; and providing a structure (10) within the enclosure for holding the radioactive material.

8. A method according to claim 7, wherein the structure (10) is adapted to support fuel rods (14).

9. A corrosion resistant enclosure for a radioactive material container, the enclosure having at least two sections (1,2,8,15) of copper or a copper alloy material which have been friction stir welded together.

10. A radioactive material container for receiving radioactive material, the container comprising a corrosion resistant enclosure according to claim 9; and a structure (10) within the enclosure for holding the radioactive material, the enclosure being open to allow radioactive material (14) to be loaded into the structure (10).

11. A method of storing radioactive material, the method comprising providing a container according to claim 10, or a container fabricated according to claim 7 or claim 8, or a container having an enclosure according to claim 9 or fabricated according to any of claims 1 to 6; loading radioactive material (14) into the container through an opening (11); and welding a closure member (15,21) across the opening (11) so that the radioactive material (14) is fully contained within the container.

12. A method according to claim 11, wherein the opening (11) faces upwardly during the loading and welding steps.

13. A method according to claim 11 or claim 12, wherein the closure member (15,21) is friction stir welded to the enclosure.

14. A method according to any of claims 11 to 13, wherein the radioactive material (14) comprises radioactive waste.

## Patentansprüche

1. Verfahren zur Herstellung einer korrosionsbeständigen Kapsel für einen Behälter mit radioaktivem Material, wobei das Verfahren das Reibrührverschweißen wenigstens zweier Abschnitte (1, 2, 8, 15) aus Kupfer oder einer Kupferlegierung umfaßt.

2. Verfahren nach Anspruch 1, das das Reibrührverschweißen aller Abschnitte (1, 2, 8, 15) der Kapsel umfaßt.

3. Verfahren nach Anspruch 1 oder Anspruch 2, bei dem das Gehäuse eine Öffnung (11) begrenzt, durch die radioaktives Material bei der Benutzung eingeladen werden kann, wobei einer der Abschnitte (1, 2, 8, 15) ein Verschlußteil (15, 21) zum Verschließen der Öffnung (11) aufweist.

4. Verfahren nach Anspruch 3, bei dem das Verschlußteil (15) und die Wand (1, 2) der Kapsel, die die Öffnung (11) umgibt, abgeschrägt sind, so daß das Verschlußteil (15) vor dem Verschweißen von Verschlußteil (15) und Wand (1, 2) durch die Kapsel abgestützt werden kann.

5. Verfahren nach Anspruch 3, bei dem wenigstens ein Teil des Verschlußteils (21) eine seitliche Abmessung aufweist, die größer als die entsprechende Abmessung der Wand (1, 2) der Kapsel ist, die die Öffnung (11) umgibt, so daß das Verschlußteil (21) vor dem Verschweißen von Verschlußteil (21) und Wand (1, 2) durch die Kapsel abgestützt werden kann.

6. Verfahren nach einem der vorstehenden Ansprüche, bei dem das Verschweißen das stationäre Festhalten der Abschnitte (1, 2) der Kapsel und das Bewegen eines Reibrührschweißwerkzeugs (5) längs einer Verbindungslinie zwischen den Abschnitten (1, 2) umfaßt.

7. Verfahren zur Herstellung eines Behälters zur Aufnahme von radioaktivem Material, bei dem eine offene Kapsel nach einem der Ansprüche 3 bis 6 hergestellt und in der Kapsel eine Struktur (10) zum Festhalten des radioaktiven Materials angeordnet wird.

8. Verfahren nach Anspruch 7, bei dem die Struktur (10) zum Abstützen von Brennstäben (14) angepaßt ist.

9. Korrosionsbeständige Kapsel für einen Behälter mit radioaktivem Material, die wenigstens zwei Abschnitte (1, 2, 8, 15) aus Kupfer oder einer Kupferlegierung aufweist, die durch Reibrührschweißen verbunden sind.

10. Behälter zur Aufnahme von radioaktivem Material, der eine korrosionsbeständige Kapsel nach Anspruch 9 und in der Kapsel eine Struktur (10) zum Festhalten des radioaktiven Materials aufweist, wobei die Kapsel offen ist, um das Einladen von radioaktivem Material in die Struktur (10) zu ermöglichen.

11. Verfahren zum Lagern von radioaktivem Material, bei dem ein Behälter nach Anspruch 10 oder ein nach Anspruch 7 oder Anspruch 8 hergestellter Behälter oder ein Behälter mit einer Kapsel nach Anspruch 9 oder ein nach einem der Ansprüche 1 bis 6 hergestellter Behälter ausgebildet wird, radioaktives Material (14) durch eine Öffnung (11) in den Behälter geladen und ein Verschlußteil (15, 21) über die Öffnung (11) geschweißt wird, so daß das radioaktive Material (14) vollständig in dem Behälter eingeschlossen ist.

12. Verfahren nach Anspruch 11, bei dem die Öffnung (11) beim Beladen und Verschweißen nach oben gekehrt wird.

13. Verfahren nach Anspruch 11 oder Anspruch 12, bei dem das Verschlußteil (15, 21) durch Reibrührschweißen mit der Kapsel verbunden wird.

14. Verfahren nach einem der Ansprüche 11 bis 13, bei dem das radioaktive Material (14) radioaktiven Abfall aufweist.

## Revendications

1. Procédé pour fabriquer une enceinte résistant à la corrosion pour un conteneur de matériaux radioactifs, le procédé comprenant le soudage par agitation-friction d'au moins deux tronçons (1, 2, 8, 15) de matériau en cuivre ou de matériau en alliage de cuivre.

2. Procédé selon la revendication 1, consistant à souder par agitation-friction tous les tronçons (1, 2, 8, 15) de l'enceinte ensemble.

3. Procédé selon l'une ou l'autre des revendications 1 et 2, dans lequel l'enceinte définit une ouverture (11) à travers laquelle on peut charger un matériau radioactif en utilisation, l'un des tronçons (1, 2, 8, 15) comprenant un élément de fermeture (15, 21) pour fermer l'ouverture (11).

4. Procédé selon la revendication 3, dans lequel l'élément de fermeture (15) et la paroi (1, 2) de l'enceinte entourant l'ouverture (11) sont effilés de sorte que l'élément de fermeture (15) peut être supporté par l'enceinte avant de souder l'élément de fermeture (15) sur la paroi (1,2).

5. Procédé selon la revendication 3, dans lequel au moins une partie de l'élément de fermeture (21) a une dimension latérale supérieure à la dimension correspondante de la paroi (1, 2) de l'enceinte entourant l'ouverture (11) de sorte que l'élément de fermeture (21) peut être supporté par l'enceinte avant de souder l'élément de fermeture (15) sur la paroi (1, 2).

6. Procédé selon l'une quelconque des revendications précédentes, dans lequel l'opération de soudage consiste à maintenir les tronçons (1, 2) de l'enceinte stationnaires et à déplacer un outil de soudage par agitation-friction (5) le long d'une ligne de jointure définie entre les tronçons (1,2).

7. Procédé pour fabriquer un conteneur destiné à recevoir un matériau radioactif, le procédé consistant à fabriquer une enceinte ouverte selon l'une des revendications 3 à 6, et à fournir une structure (10) à l'intérieur de l'enceinte pour maintenir le matériau radioactif.

8. Procédé selon la revendication 7, dans lequel la structure (10) est adaptée pour supporter des barres de combustible (14).

9. Enceinte résistante à la corrosion pour un conteneur de matériau radioactif, l'enceinte ayant au moins deux tronçons (1, 2, 8, 15) en matériau en cuivre ou en alliage de cuivre qui ont été soudés par agitation-friction ensemble.

10. Conteneur pour matériau radioactif destiné à recevoir un matériau radioactif, le conteneur comprenant une enceinte résistante à la corrosion selon la revendication 9, et une structure (10) à l'intérieur de l'enceinte pour maintenir le matériau radioactif, l'enceinte étant ouverte pour permettre de charger le matériau radioactif (14) dans la structure (10).

11. Procédé pour stocker un matériau radioactif, le procédé consistant à fournir un conteneur selon la revendication 10, ou un conteneur fabriqué en accord avec l'une ou l'autre des revendications 7 et 8, ou un conteneur ayant une enceinte selon la revendication 9, ou fabriqué en accord avec l'une des revendications 1 à 6, à charger un matériau radioactif (14) dans le conteneur à travers une ouverture (11) et à souder un élément de fermeture (15, 21) à travers l'ouverture (11) de sorte que le matériau radioactif (14) est totalement contenu à l'intérieur du conteneur.

12. Procédé selon la revendication 11, dans lequel l'ouverture (11) fait face vers le haut pendant les opérations de chargement et de soudure.

13. Procédé selon l'une ou l'autre des revendications 11 et 12, dans lequel l'élément de fermeture (15, 21) est soudé sur l'enceinte par soudage par agitation-friction.

14. Procédé selon l'une quelconque des revendications 11 à 13, dans lequel le matériau radioactif (14) comprend des déchets radioactifs.
